# EUROPEAN PATENT APPLICATION

(11) **EP 1 432 219 A1**
(43) Date of publication of application: **23.06.2004**
(21) Application number: 03258047.4
(22) Date of filing: 19.12.2003
(51) Int. Cl.: H04M 3/533, H04L 12/54

(54) **Converting of centrally recorded voicemail messages to multimedia messages and forwarding of the messages to a portable device**

(30) Priority: 19.12.2002 US 324942
(71) Applicant: Openwave Systems Inc., Redwood City, CA 94063 (US)
(72) Inventor: Tripathy, Abinash, San Mateo CA 94403 (US); Witmer, Daniel P., Morgan Hill CA 95037 (US); Martin, Bruce K., Palo Alto CA 94306 (US); Stein, Lawrence M., San Carlos CA 94070 (US)
(74) Representative: Dixon, Philip Matthew

(57) **Abstract**

A method and apparatus for processing voicemail messages are described. In one embodiment, the method includes receiving a voicemail message in a network element (114) and storing the voicemail message in the network element (122). The method also includes transmitting the voicemail message to a wireless device, wherein the voicemail message is to be stored and processed by the wireless device, and wherein the wireless device can repeatedly process the voicemail message without receiving additional information from the network element.

## Description

### FIELD OF THE INVENTION

The present invention pertains to voicemail messaging. More particularly, the present invention relates to voicemail messaging for wireless devices.

### BACKGROUND OF THE INVENTION

Wireless telephone service providers typically provide voicemail to their subscribers. In a typical wireless voicemail system, when subscribers are not available to answer incoming calls, the service provider routes the calls to a voicemail messaging system. The voicemail messaging system plays subscribers' prerecorded greetings and prompts callers to leave messages. The messages are received and stored on relatively large data storage devices for future playback. Typically, to playback voicemail messages, subscribers connect to their service provider's voicemail system and traverse a series of audible prompts to select and playback voicemail messages. After the voicemail messages are played back, the subscribers disconnect from the voicemail system. One disadvantage of this type of voicemail system is that subscribers must reconnect to the voicemail system each time they want to playback a voice message. Another disadvantage of this voicemail system is that its menu structure can be difficult to traverse because it is audibly presented to subscribers. For example, because a wireless telephone's keypad is typically located next to its earpiece, a subscriber typically traverses the audible menus by moving the telephone to his ear, to listen to the audible menu, and then to his line of sight, to use the keypad for selecting menu options. Another disadvantage of this voicemail system is that it must store the voicemail messages in relatively large storage devices for long periods of time (e.g., until subscribers delete the voicemail messages).

### SUMMARY OF THE INVENTION

The present invention includes a method and apparatus for processing voicemail messages. In one embodiment, the method includes receiving a voicemail message in a network element. The method also includes storing the voicemail message in the network element. The method also includes transmitting the voicemail message to a wireless device, wherein the voicemail message is to be stored and accessed by the wireless device, and wherein the wireless device can repeatedly access the voicemail message without receiving additional information from the network element.

### BRIEF DESCRIPTION OF THE DRAWINGS

The present invention is illustrated by way of example and not limitation in the Figures of the accompanying drawings, in which like references indicate similar elements and in which:

Figure 1 is a block diagram illustrating a communications network, according to embodiments of the invention;

Figure 2 is a block diagram illustrating the path of a voicemail message, according to embodiments of the invention;

Figure 3A is a flow diagram illustrating operations of receiving a call for a wireless telephone service subscriber, according to embodiments of the invention;

Figure 3B is a flow diagram illustrating operations of processing a voicemail message, according to embodiments of the invention;

Figure 3C is a flow diagram illustrating operations of storing and deleting voicemail messages, according to embodiment of the invention;

Figure 4 is a block diagram illustrating a wireless device, according to embodiments of the invention;

Figure 5 is a flow diagram illustrating operations of transmitting a voicemail message through a data network to a wireless device, according to embodiments of the invention;

Figure 6 is a block diagram illustrating a wireless device providing a voicemail message options menu, according to embodiments of the invention; and

Figure 7 is a flow diagram illustrating operations for processing a voicemail message, according to embodiments of the invention.

### DETAILED DESCRIPTION

A method and apparatus for processing voicemail messages are described. Note that in this description, references to "one embodiment" or "an embodiment" mean that the feature being referred to is included in at least one embodiment of the present invention. Further, separate references to "one embodiment" in this description do not necessarily refer to the same embodiment; however, neither are such embodiments mutually exclusive, unless so stated and except as will be readily apparent to those skilled in the art. Thus, the present invention can include any variety of combinations and/or integrations of the embodiments described herein.

Herein, block diagrams illustrate exemplary embodiments of the invention. Also herein, flow diagrams illustrate operations of the exemplary embodiments of the invention. The operations of the flow diagrams will be described with references to the exemplary embodiments shown in the block diagrams. However, it should be understood that the operations of the flow diagrams could be performed by embodiments of the invention other than those discussed with reference to the block diagrams, and embodiments discussed with references to the block diagrams could perform operations different than those discussed with reference to the flow diagrams.

### Overview

In one embodiment of the invention, a wireless voicemail system receives a voicemail message, over a voice network, for a wireless telephone service subscriber. The wireless voicemail system creates a set of one or more multimedia messaging service (MMS) messages by compressing the voicemail message and combining it with information about the voicemail message (e.g., the telephone number from which the voicemail message was sent, the time the voicemail message was sent, etc.). MMS is a 3G messaging standard which enables communication of non-real-time multimedia messages containing content such as pictures, music, images, graphics, and ring tones, over a wireless network. See, e.g., "WAP MMS, Architecture Overview," WAP-205, WAP Forum (Approved Version April 25, 2001); "WAP MMS, Client Transactions," WAP-206, WAP Forum (Approved Version January 15,2002); "WAP MMS, Encapsulation," WAP-209, WAP Forum (Approved Version January 5, 2002). The voicemail message is submitted to the MMSC (i.e., the network element enabling routing of MMS messages) as an MMS message. The MMS message is temporarily stored in a network element and then transmitted through a data network to an MMS-compatible wireless device associated with the subscriber for whom the voicemail message was received.

### Exemplary Architecture

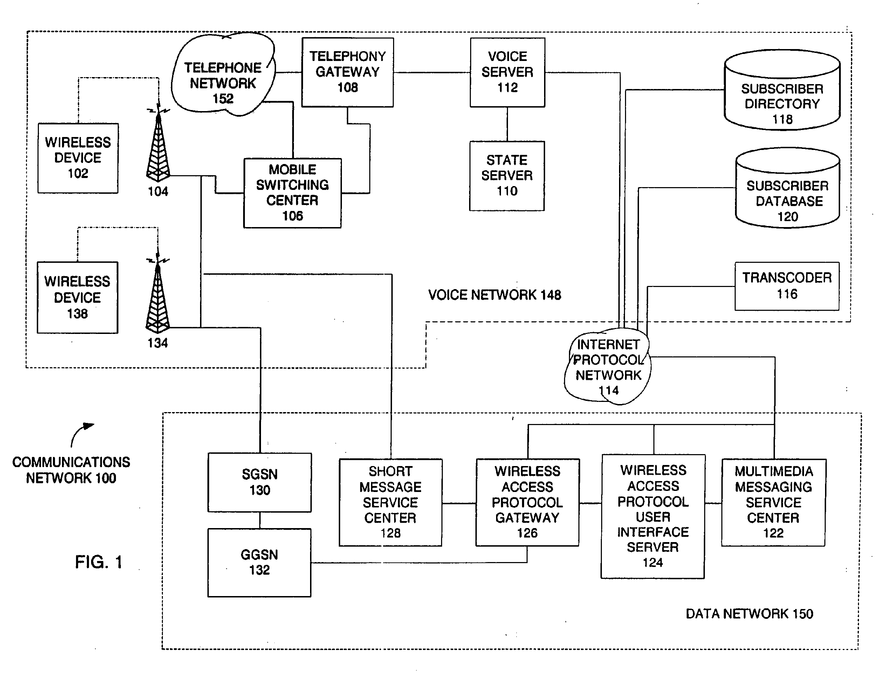

Figure 1 is a block diagram illustrating a communications network, according to embodiments of the invention. As shown in Figure 1, the communications network 100 includes a voice network 148 and a data network 150. The voice network 148 includes the following components. The voice network 148 includes wireless devices 102 and 138, which are capable of wirelessly connecting to base stations 104 and 134. In one embodiment of the invention, the wireless devices 102 and 138 are wireless (e.g., cellular) telephones. However, in alternative embodiments of the invention, the wireless devices 102 and 138 can be personal digital assistants (PDAs), notebook computers, two-way pagers, or other suitable wireless devices, or some combination thereof. The base stations 104 and 134 are connected to a mobile switching center 106. The mobile switching center 106 is connected to a telephony gateway 108 and a telephone network 152. The telephony gateway 108 is also connected to a voice server 112, which is connected to a state server 110. The voice server 112 is connected to an Internet Protocol (IP) network 114. In one embodiment the IP network 114 is the Internet, while in alternative embodiments, the IP network 114 could be a corporate Intranet, wide area network (WAN), local area network (LAN), or any combination these. In the voice network 148, the voice server 112 is also connected to a subscriber directory 118, subscriber database 120, and transcoder 116 through the IP network 114.

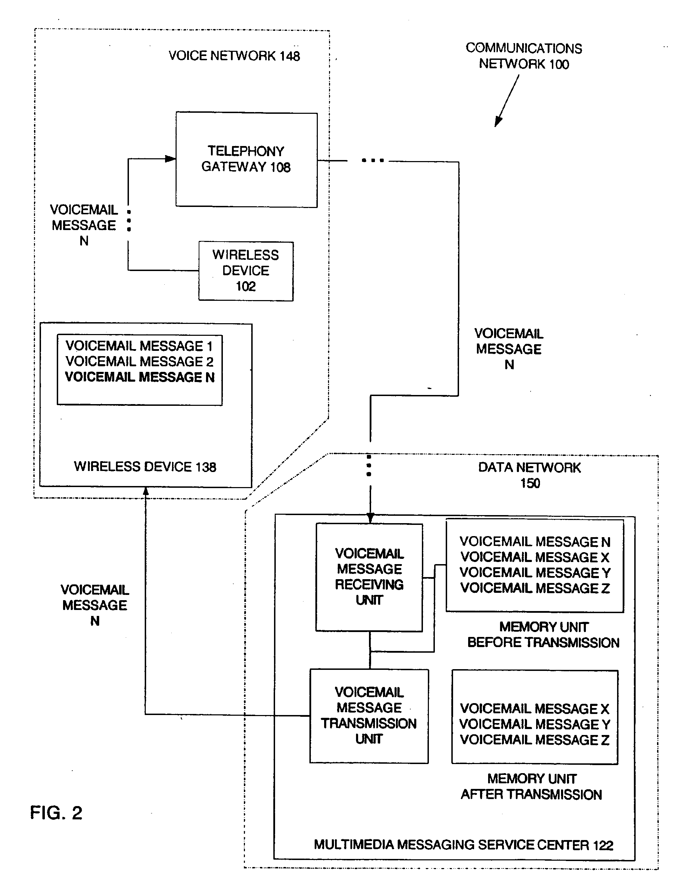

The data network 150 includes the following components. In the data network 150, a multimedia messaging service center (MMSC) 122, wireless access protocol (WAP) user interface server 124, and WAP gateway 126 are connected to the voice network 148 through a link to the IP network 114. The multimedia messaging service center 122 is also connected to the WAP user interface server 124 and the WAP gateway 126, which is connected to a short message service center 128. In one embodiment, the multimedia messaging service center 122 includes a memory unit, a voicemail message receiving unit, and a voicemail message transmission unit, which are shown in Figure 2. The WAP gateway 126 is also connected to a General Packet Radio Service Gateway Support Node (GGSN) 132. The General Packet Radio Service (GPRS) is a data service that allows information to be sent and received across a wireless network. In one embodiment, the wireless access gateway 126 is connected to the GGSN 132 by an IP network (not shown). The GGSN 132 is connected to a Serving GPRS Support Node (SGSN) 130. The SGSN 130 is connected to the mobile switching center 106, which is included in the voice network 148.

Alternative embodiments of the communications network 100 include much greater numbers of certain components described with reference to Figure 1. For example, embodiments of the communications network 100 may include thousands of wireless devices, hundreds of base stations, hundreds of mobile switching centers, etc. Furthermore, alternative embodiments of the communications network 100 include different levels of connectivity between the components (e.g., the subscriber directory 118, subscriber database 120, and transcoder 116 can be directly connected). In addition, it should be understood that the network 100 could omit certain components or include components not shown in Figure 1. For example, the network 100 can include elements for transmitting data using code division multiple access (CDMA) techniques. As such, the network 100 may not include SGSN 130 and GGSN 132. Moreover, the network 100 may be implemented independent of the IP network platform, connecting the various network elements using other suitable networking connections.

The components of the communications network 100 may be implemented in the form of conventional computing platforms, including one or more processors, application specific integrated circuits (ASICs), memories, and/or machine readable media for performing operations according to embodiments of the invention. Machine-readable media includes any mechanism that provides (i.e., stores and/or transmits) information in a form readable by a machine (e.g., a computer). For example, a machine-readable medium includes read only memory (ROM); random access memory (RAM); magnetic disk storage media; optical storage media; flash memory devices; electrical, optical, acoustical or other form of propagated signals (e.g., carrier waves, infrared signals, digital signals, etc.) etc. In one embodiment, one or more of the components of communications network 100 are machine-readable media executing on a processor to carryout the operations described herein. However, in alternative embodiments, the components of communications network 100 are other types of logic (e.g., digital logic) for executing the operations described herein. Alternatively, according to embodiments of the invention, one or more of the components can include a number of separate computer systems. For example, the subscriber directory 118 may be one or more separate computer systems that store wireless device information. Similarly, the subscriber information base 120 may be one or more separate data storage and retrieval systems for maintaining subscriber data. As yet another alternative, the components of the communications network 100 may be combined or subdivided. For example, the telephony gateway 108 and voice server 112 could be merged into one component or they each could be divided into multiple components, according to embodiments of the invention.

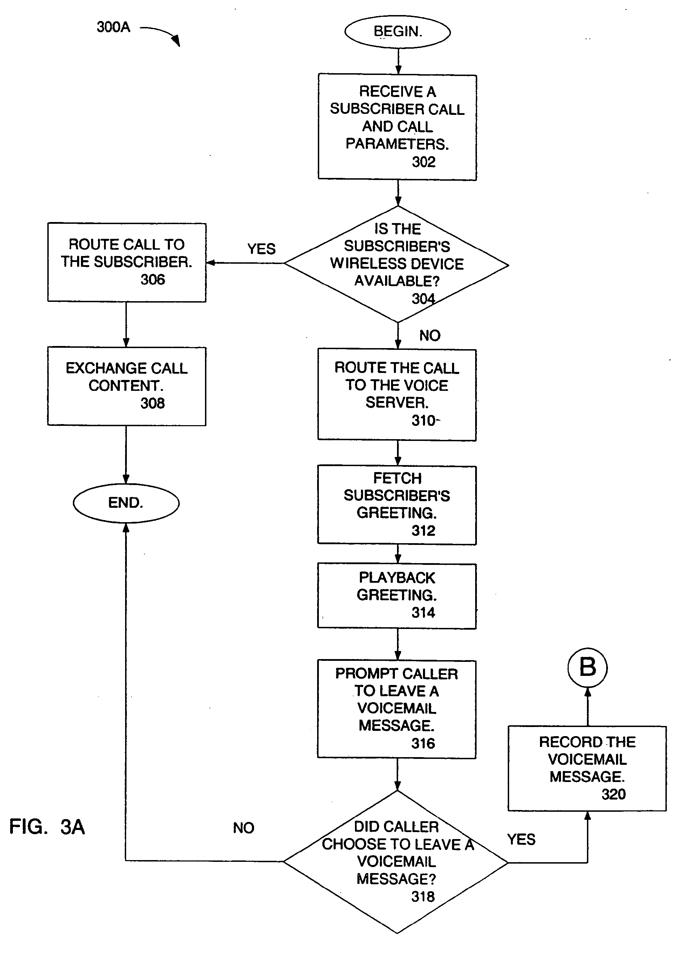

In the following discussion, Figure 2 will describe the flow of a voicemail message through the communications network 100, while Figures 3A-3C will describe the operations for processing a voicemail message in the communications network 100. These Figures will be introduced and discussed in their numerical order, but there will be numerous references back to previously introduced Figures (e.g., the discussion of Figure 3A will refer to material presented in the discussion of Figure 1).

Figure 2 is a block diagram illustrating the path of a voicemail message, according to embodiments of the invention. Figure 2 shows the communications network 100 including the voice network 148 connected to the data network 150. In Figure 2, only certain components of the voice network 148 and data network 150 are shown. In particular, Figure 2 shows the voice network's telephony gateway 108 and wireless devices 138 and 102, while also showing the data network's multimedia messaging service center 122. According to one embodiment of the invention, the telephony gateway 108 receives voicemail messages from wireless devices of the voice network 148 and/or from devices of the telephone network 150 (not shown). In Figure 2, the telephony gateway 108 receives a voicemail message N from the wireless device 102.

In Figure 2, the voicemail message N is processed by a number of voice network components (not shown) before being transmitted to the multimedia messaging service center 122 in the data network 150. The multimedia messaging service center 122 is a network element that temporarily stores and forwards voicemail messages to their recipients (e.g., wireless device 138). In Figure 2, the multimedia messaging service center 122 is storing a number of voicemail messages including voicemail messages N, X, Y, and Z in its memory unit. The multimedia messaging service center 122 temporarily stores these messages until they can be transmitted to wireless devices associated with the subscribers for which they were received. For example, as shown in Figure 2, the multimedia messaging service center 122 stores the voicemail message N until it can transmit the voicemail message N to the wireless device 138 to be stored. After transmitting the voicemail message N to the wireless device 138, the multimedia messaging service center 122 deletes the voicemail message N from its storage device. As a result, the voicemail message N is stored exclusively in the wireless device 138 after it is deleted by the MMSC. Because the voicemail message N is stored in the wireless device 138, the wireless device 138 can output the voicemail message N multiple times to the subscriber without receiving additional data from the multimedia messaging service center 122 or other components of the communications network 100.

Figure 3A is a flow diagram illustrating operations of receiving a call for a wireless telephone service subscriber, according to embodiments of the invention. In the discussion below, embodiments of the invention that do not perform all operations shown in Figure 3A will also be described. The operations of Figure 3A will be described with reference to the exemplary embodiment of Figure 1. The flow diagram 300A commences at block 302, where a call and call parameters are received for a wireless telephone service subscriber. For example, a call and call parameters are received for a wireless telephone network subscriber associated with the wireless device 138. Calls may be received from other wireless telephone service subscribers (e.g., the wireless device 102) and/or other devices such as devices that are part of the telephone network 152. In one embodiment, call parameters include the caller's telephone number, name, address, current location, and/or the time of day. In alternative embodiments, the call parameters include additional information. The process continues at block 304.

At decision block 304, it is determined whether the subscriber is available to take the call. For example, the mobile switching center 106 receives a call destined for a particular subscriber and determines whether the subscriber is currently available to take the voice call (e.g., by using standard force call signaling technology). If the subscriber is available to take the voice call, the process continues at block 306. Otherwise, the process continues at block 310.

At block 306, the call is routed to the subscriber. For example, if the subscriber's wireless device is available, the mobile switching center 106 routes the call to the subscriber's wireless device. As a more specific example, the mobile switching center 106 creates a virtual circuit between the calling device (e.g., wireless device 102) and the receiving device (e.g., wireless device 138). The process continues at block 308.

At block 308, call content is exchanged. For example, the subscribers associated with wireless devices 102 and 138 exchange call content. As a more specific example, the subscribers have a conversation, which is transmitted over the earlier created virtual circuit. From block 308, the process ends.

As shown in block 310, the call is routed so that a voicemail message can be recorded. For example, the mobile switching center 106 routes the call to the telephony gateway 108, where a voicemail message can be recorded. The process continues at block 312.

At block 312, the subscriber's prerecorded greeting is fetched. For example, in order to fetch the subscriber's greeting, the telephony gateway 108 transmits a voice extended markup language (VoiceXML) message to the voice server 112 to determine whether the subscriber is a registered user of the wireless telephone service. In response to the VoiceXML message, the voice server 112 queries the subscriber directory 118, which stores subscriber access control information and subscriber data, to determine whether the subscriber is a registered wireless telephone service subscriber. If the subscriber is registered, the voice server 112 fetches the subscriber's greeting from the subscriber database 120 and transmits it to the telephony gateway 108. In one embodiment of the invention, the voice server 112 sends the greeting as part of a VoiceXML message. The process continues at block 314.

At block 314, the greeting is played back. For example, in one embodiment, the telephony gateway renders the VoiceXML message that included the greeting; thus playing back the greeting to the caller. Alternative embodiments may use other suitable messaging formats for playing back the greeting. The process continues at block 316.

At block 316, the caller is prompted to leave a voicemail message. For example, the voice server 112 transmits a VoiceXML message to the telephony gateway 108 that audibly prompts the caller to leave a voicemail message. The process continues at block 318.

At block 318, it is determined whether the caller chose to leave a voicemail message. If the caller chose to leave a voicemail message, the process continues at block 320. Otherwise, the process ends.

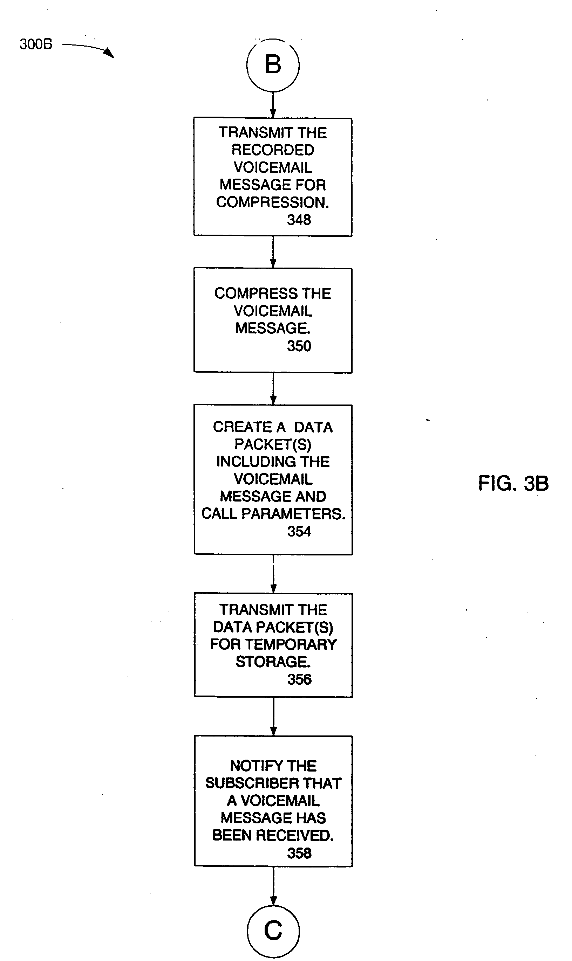

At block 320, the caller's voicemail message is recorded. For example, the voice server 112 records the caller's voicemail message. In one embodiment, the voice server 112 samples and encodes the voicemail message at a rate of 64 kilobytes per second. In one embodiment the recording is in the pulse code modulation (PCM) format. In alternative embodiments, faster or slower sampling rates are used. From block 320, the process continues at block 348, which is shown in Figure 3B.

Figure 3B is a flow diagram illustrating operations of processing a voicemail message, according to embodiments of the invention. The operations of Figure 3B will be described with reference to the exemplary embodiment of Figure 1. The flow diagram 300B commences at block 348, where the recorded message is transmitted for compression. For example, referring to Figure 1, the voice server 112 transmits the recorded voicemail message to the transcoder 116. From block 348, the process continues at block 350.

At block 350, the voicemail message is compressed. For example, the transcoder 116 compresses the voicemail message from a sampling rate of 64 kilobytes per second to a sampling rate of 4 kilobytes per second. Therefore, the storage space and bandwidth required for storing and transmitting the voicemail message is significantly reduced. Embodiments of the invention call for any suitable telephony compression/decompression algorithm. After compressing the voicemail message, the transcoder 116 transmits the voicemail message back to the voice server 112. The process continues at block 354.

As shown in block 354, a set of data packets including the voicemail message and call parameters is created. For example, the voice server 112 creates a set of one or more data packets that include the voicemail message and the call parameters. In one embodiment of the invention, operator branding or logos can be included in the message. In one embodiment of the invention, the set of data packets is in the multipurpose Internet mail extensions (MIME) messaging format. In one embodiment of the invention, the voice server 112 creates a set of one or more TCP/IP packets. In one embodiment, the TCP/IP packets comprise an MMS message including the voicemail message and call parameters. The process continues at block 356.

As shown in block 356, the set of one or more data packets, which includes the voicemail message and call parameters, is transmitted for temporary storage. In one embodiment, the voice server 112 transmits the voicemail message and call parameters as an MMS message to the multimedia message service center 122. In one embodiment of the invention, the voice server 112 sends the MMS message to the multimedia messaging service center 122 using simple mail transfer protocol (SMTP), where the MMS message is addressed to the subscriber's wireless device. In other words, the voice server 112 emails the MMS message to the multimedia messaging service center 112. In an alternative embodiment, the voice server 112 transmits the set of data packets containing the voicemail message and call parameters to the subscriber database 120 for temporary storage.

In yet another embodiment, the voice server 112 transmits the set of data packets to both the multimedia messaging service center 112 and the subscriber database 120. Voicemail messages that are sent to the subscriber database 120 are marked as "not downloaded" (or the equivalent) to indicate that they have not been transmitted to the subscriber's wireless device. In one embodiment, in addition to transmitting the set of data packets for temporary storage, the voice server 112 stores an entry in the state server 110 corresponding to the voicemail message and call parameters. The state server entry will be used to retrieve the voicemail message and call parameters. The state server entry includes an address in the subscriber database 120 where the voicemail message and call parameters are to be stored. From block 356, the process continues at block 358.

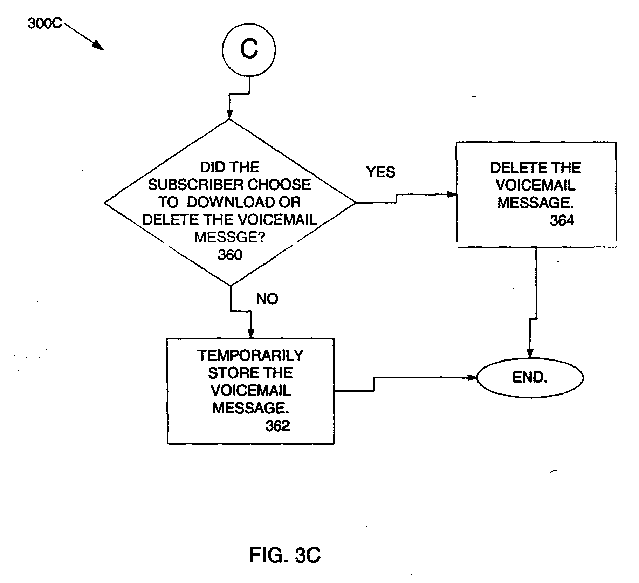

As shown in block 358, the subscriber is notified that a voicemail message has been received. For example, in one embodiment, the multimedia messaging service center 122 transmits a signal to the WAP gateway 126, which transmits a notification to the wireless device 138. In an alternative embodiment, the voice server 112 sends a signal to the WAP gateway 126, which delivers the notification that a voicemail message is available to the wireless device 138. The notification may take the form of, for example, a WAP push. In one embodiment, a uniform resource locator (URL), which indicates where the voicemail message and call parameters are stored, is included in this notification. The URL may include a telephone number, subscriber voicemail mailbox address, and/or an address in a multimedia messaging service center, according to embodiments of the invention. From block 358, the process continues at block 360 which is shown in Figure 3C.

According to alternative embodiments, the voicemail message and call parameters may be automatically downloaded to wireless devices, without notifying subscribers in advance that voicemail messages have been received. For such embodiments, it should be understood that certain operations of the following flow diagrams might not be performed.

Figure 3C is a flow diagram illustrating operations of storing and deleting voicemail messages, according to embodiments of the invention. The flow diagram of Figure 3C will be described with reference to the block diagram of Figure 1. Some embodiments do not store and delete voicemail messages exactly as set forth in Figure 3C. However, those embodiments will be described below in the discussion of Figure 3C. At decision block 360, it is determined whether the subscriber chose to download or delete the voicemail message. For example, the multimedia messaging service center 122 determines whether the subscriber chose to download or delete the voicemail message. If the subscriber chose to download or delete the voicemail message, the process continues at block 364. Otherwise, the process continues at block 362.

At block 362, the voicemail message is temporary stored. For example, the multimedia messaging service center 122 temporarily stores the voicemail message. In one embodiment, the multimedia messaging service center 122 stores the voicemail message until the subscriber chooses to download the voicemail message or indicates that it should be deleted. In an alternative embodiment, the subscriber database 120 stores the voicemail message and call parameters until the subscriber indicates that they should be deleted. From block 362, the process ends.

As shown in block 364, the voicemail message is deleted. For example, after the subscriber chooses to download or delete the voicemail message, the multimedia messaging service center 122 deletes the voicemail message from its storage. In one embodiment, the message is deleted from the multimedia messaging service center 122, while still being stored in the subscriber's mailbox in the subscriber database 120. Messages stored in the subscriber database 120 may eventually be deleted according to any suitable aging policy. For example, messages that are marked "downloaded," to indicate that they have been downloaded to the subscriber's wireless device, can be deleted when they are five days old. As another example, the subscriber database 120 can store the ten most recent downloaded messagesand all "not downloaded" messages. From block 364, the process ends.

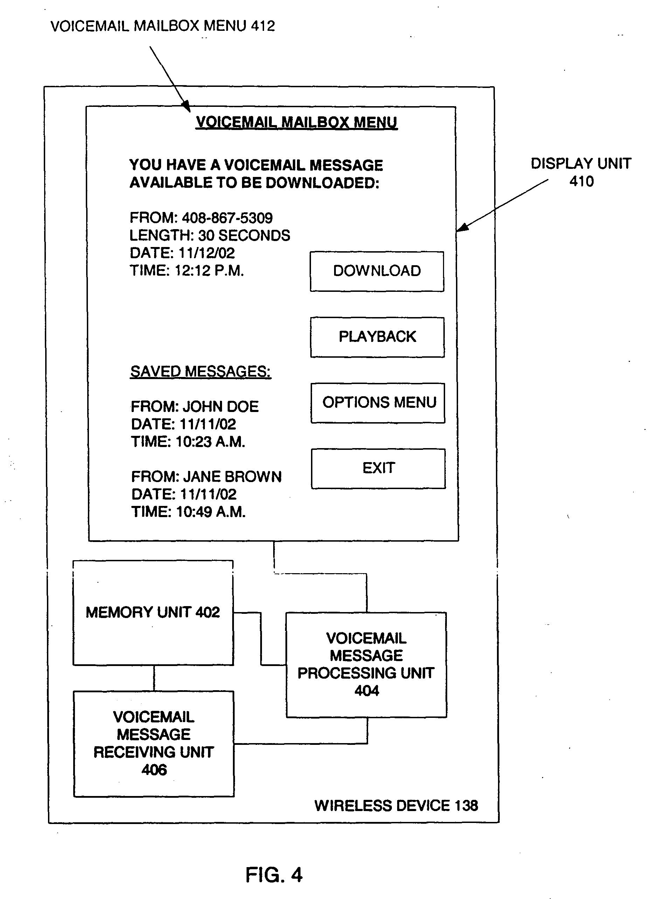

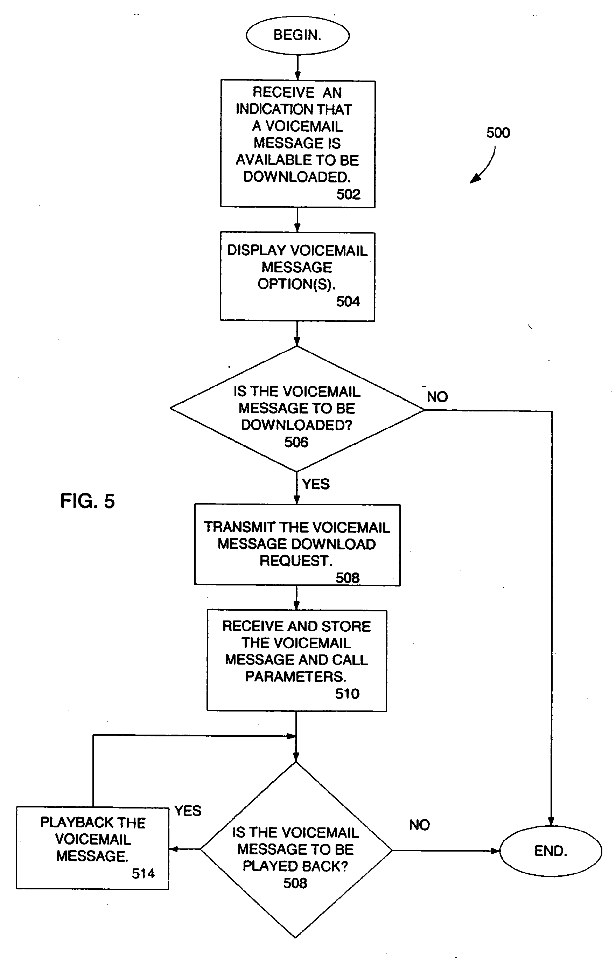

While the discussion of Figures 3A, 3B, and 3C described operations for receiving a voicemail message, the discussion of Figures 4 and 5 will describe a wireless device and operations for storing a voicemail message on the wireless device.

Figure 4 is a high-level block diagram illustrating the relevant components of a wireless device, according to embodiments of the invention. As shown in Figure 4, the wireless device 138 includes a memory unit 402, which is connected to a voicemail message processing unit 404. The voicemail message processing unit 404 is connected to a voicemail message receiving unit 406, which is also connected to the memory unit 402. The voicemail message processing unit 404 is connected to a display unit 410. In order to focus the discussion, several components of the wireless device 138 are not shown in Figure 4. For example, Figure 4 does not show an earpiece, microphone, keypad, wireless transceiver, antenna, and other components.

According to alternative embodiments of the invention, the wireless device units can be subdivided or integrated. For example, the voicemail message processing unit 404 and the voicemail message receiving unit 406 can be integrated into a single unit. Conversely, each of these units may be divided into multiple units. Moreover, according to alternative embodiments, the units can have differing connection architectures. For example, the units can be fully connected or connected to a common bus. The units may be implemented in software, on machine readable media, or as some other suitable logic.

In one embodiment of the invention, the display unit 410 graphically displays various user interface menus, such as the voicemail mailbox menu 412, as shown in Figure 4. In one embodiment, the voicemail mailbox menu 412 includes a listing of new voicemail messages, which have not been downloaded, and a listing of saved voicemail messages, which are stored in the memory unit 402. In one embodiment, the listings include a visual rendering of some or all of the call parameters. For example, for each message, the listing indicates the phone number from which the message was received, duration of the voicemail message, and time and date the voicemail message was received. The voicemail mailbox menu 412 also includes voicemail message playback and download buttons, which when activated causes a selected voicemail to be played back or downloaded. In one embodiment of the invention, the voicemail message processing unit 404 executes an MMS client to display the voicemail mailbox menu 412 and/or render the call parameters.

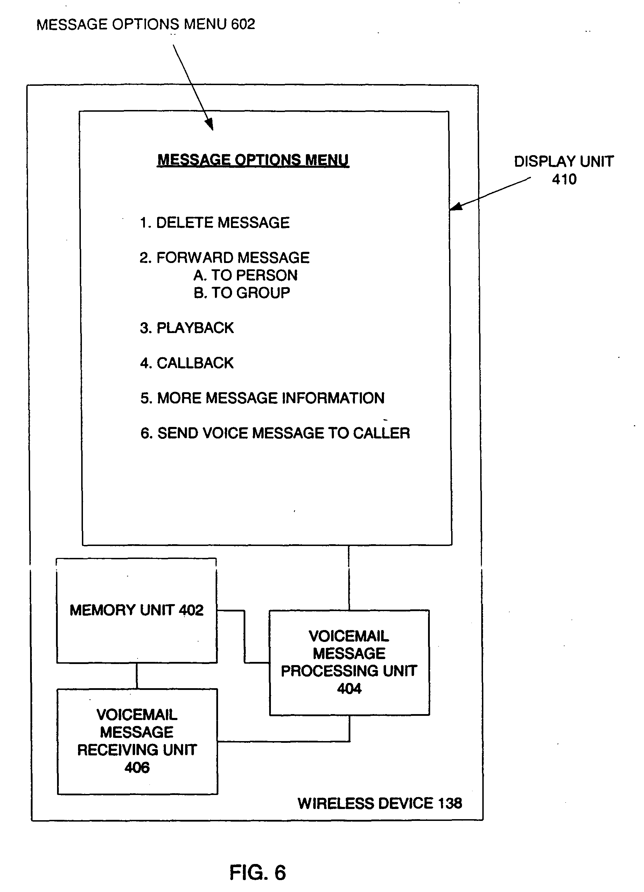

The operations of the wireless device units shown in Figure 4 will be described below with reference to Figures 5 and 6.

Figure 5 is a flow diagram illustrating operations of transmitting a voicemail message through a data network to a wireless device, according to embodiments of the invention. The operations of the flow diagram 500 will be described with reference to the exemplary block diagrams of Figures 1 and 4. Flow diagram 500 commences at block 502, where a notification is received indicating that a voicemail message is available to be downloaded. In one embodiment, the short message service center 128 receives a WAP push from the multimedia messaging service center 122 indicating that a message is available to be downloaded. The wireless device 138 receives the indication from the short message service center 128 that a message is available to be downloaded. In an alternative embodiment, the wireless device 138 receives the indication from the WAP gateway 126. In one embodiment, the notification includes a URL that can be used to request the voicemail message, as described above. In one embodiment, after the notification is received, the wireless device 138 graphically or audibly presents an indication that a message is available to be downloaded (e.g., the wireless device 138 displays a message on the display unit 410 or sounds an alarm). The process continues at block 504.

At block 504, a message download option is displayed. For example, the voicemail message processing unit 404 generates an option for downloading the voicemail message, while the display unit 410 displays the option. As a more specific example, as shown in Figure 4, the voicemail message processing unit 404 presents a "download" button, which when activated causes the voicemail message to be downloaded to the wireless device 138. The process continues at block 506.

At block 506, it is determined whether the voicemail message was to be downloaded. For example, the voice message processing unit 404 determines whether the subscriber activated the "download" button of the voicemail mailbox menu 412. If the voicemail message was to be downloaded, the process continues at block 508. Otherwise the process ends.

As shown in block 508, a request to download the voicemail message is transmitted. For example, the voicemail message processing unit 404 establishes a General Packet Radio Service (GPRS) session through the SGSN 130 and the GGSN 132 of the data network 150. The SGSN 130 transmits the voicemail message processing unit's download request, which includes the URL received at block 502, to the WAP gateway 126. In one embodiment, based on the URL, the WAP gateway 126 fetches the voicemail message from the multimedia messaging service center 122 and sends it back to the wireless device 138.

In an alternative embodiment, the wireless device 138 places a telephone call to the voice server 112 using the telephone number included in the earlier received URL. The voice server 112 fetches the voicemail message from a voicemail mailbox, stored in the subscriber database 120, associated with the URL telephone number. In an alternative embodiment, the voicemail server 112 looks in the state server 110 for an address in the subscriber database 120 at which the voicemail message is stored. The voice server 112 retrieves the voicemail message from the address designated in the state server 110. The process continues at block 510.

At block 510, the voicemail message and call parameters are received and stored. For example, the voicemail message receiving unit 406 receives the voicemail message and call parameters and stores them in the memory unit 402. In one embodiment, the voicemail message and call parameters are part of an MMS message received through the data network 150 from the multimedia messaging service center 122.

In an alternative embodiment, the wireless device 138 receives but does not store the voicemail message. In particular, the voice server 112 transmits a playback of the voicemail message, which is received and audibly output by the wireless device 138 (for this embodiment, the process ends at block 510). In yet another embodiment, message receiving unit 406 receives the voicemail message from the voice server 112 and temporarily stores it in the memory unit 402. The process continues at block 512.

At block 512, it is determined whether the voicemail message is to be played back. For example, in one embodiment, the voicemail message processing unit 404 determines whether the voicemail message playback button has been activated. Alternative embodiments call for other suitable mechanisms for indicating the subscriber's desire to playback the voicemail message. If the voicemail message were to be played, the process continues at block 514. Otherwise, the process ends. Alternative embodiments of the invention skip block 512, proceeding directly to block 514. For example, after the wireless device 138 receives the voicemail message from the voice server 112, it immediately plays back the voicemail message.

At block 514, the voicemail message is played back. For example, the voicemail message processing unit 404 plays back the voicemail message. In one embodiment, the voicemail message processing unit 404 plays back the voicemail message by executing an MMS client, wherein the MMS client renders the MMS message containing the voicemail message. In an alternative embodiment, the voicemail message processing unit 404 plays back the voicemail message by executing a WAP thin client. The voicemail message processing unit 404 can play back the voicemail message numerous times, so the process continues at block 512.

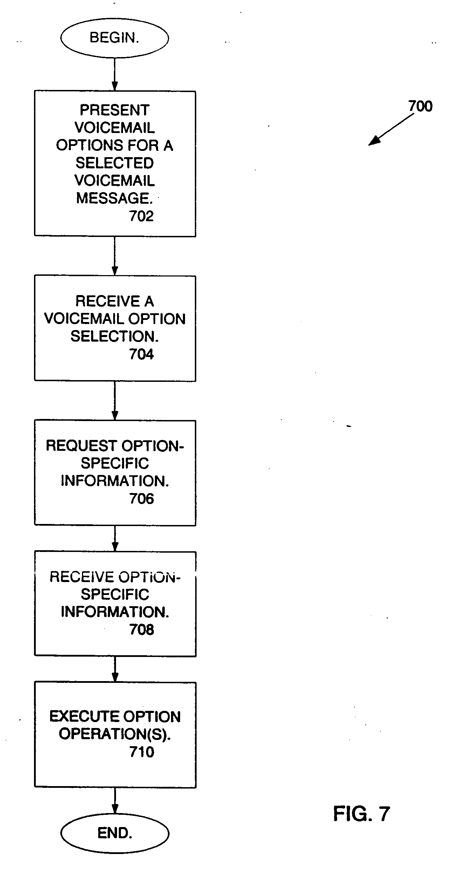

The discussion of Figures 4 and 5 described downloading, storing, and playing back a voicemail message on a wireless device. The discussion of Figures 6 and 7 will describe additional operations that a wireless device can perform on stored voicemail messages. For example, according to embodiments of the invention, a wireless device can forward, playback, and delete locally stored voicemail messages. These and other operations will be described below.

Figure 6 is a block diagram illustrating a wireless device providing a voicemail message options menu, according to embodiments of the invention. As shown in Figure 6, the wireless device 138 includes the display unit 410 displaying a voicemail message options menu 602. The voicemail options menu 602 includes the following options: 1) delete voicemail message - deletes a selected voicemail message; 2) forward voicemail message - forwards a selected voicemail message to a specific recipient(s); 3) playback - plays back a selected voicemail message; 4) callback - calls back the telephone number from which the voicemail message was received; 5)voicemail message information - displays certain of the call parameters associated with a voicemail message; and 6) send voicemail message to caller - records a voicemail message and transmits it to the caller. According to alternative embodiments of the invention, the voicemail message options menu 602 may include additional and/or different options. The units of Figure 6 (e.g., the memory unit 402 etc.) are identical to those described above in the description of Figure 4.

Figure 7 is a flow diagram illustrating operations of processing a voicemail message, according to embodiments of the invention. The flow diagram 700 will be described with reference to the exemplary embodiments of Figures 4 and 6. The flow diagram 700 commences at block 702, where voicemail options are presented for a selected voicemail message. The process continues at block 704. For example, in one embodiment, in response to a message being selected in the voicemail mailbox menu 412 (see Figure 4), the voicemail message processing unit 404 presents options for performing operations on a selected voicemail message. As a more specific example, the voicemail message processing unit 404 presents the following voicemail options for the selected voicemail message: forward, delete, playback, callback, more voicemail message information, and send voicemail to caller (see the message options menu 602). The voicemail options are not limited to those shown in Figure 6, as alternative embodiments of the invention call for other suitable voicemail options.

At block 704, a voicemail option selection is received. For example, in response to the subscriber selecting one of the displayed voicemail options, the voicemail message processing unit 404 receives the selected voicemail option. As a more specific example, referring to Figure 6, when a subscriber selects the "forward message" voicemail option, the voicemail processing unit 404 receives that voicemail option selection. The process continues at block 706.

At block 706, option-specific information is requested. For example, the voicemail message processing unit 404 requests information specific to the voicemail option selected at block 704. As a more specific example, if "forward message" were selected at block 704, the voicemail message processing unit 404 would request any necessary forwarding information such as the telephone number or email address of the voicemail message recipient(s). In alternative embodiments, the option-specific information for the forwarding option includes requests for additional information to be included with the forwarded voicemail message (e.g., another voicemail message, text message, or other information). The process continues at block 708.

As shown at block 708, the option-specific information is received. For example, the voicemail message processing unit 404 receives option-specific information specified by the subscriber. The process continues at block 710.

At block 710, the operations of the selected voicemail option are executed. For example the voicemail message processing unit 404 executes the selected voicemail option based on the option-specific information. As a more specific example, the voicemail message processing unit 404 forwards the selected voicemail message to the specified recipient(s). From block 710, the process ends.

It should be understood that the operations of flow diagram 700 are not limited to the forwarding option described above. The operations of the flow diagram 700 describe the operations for performing numerous voicemail options including those discussed above in the description of Figure 6. For some of the voicemail options, not all of the operations of the flow diagram 700 are performed. For example, if a subscriber chooses the "callback" voicemail option after selecting a particular message, the operations of blocks 706 - 708 are not performed because the voicemail message processing unit 404 performs the "callback" based on the call parameters (i.e., it uses the telephone number specified in the call parameters). Thus, in one embodiment, for the callback option, there is no need for a subscriber to input option-specific information. The call parameters may provide option-specific information for other voicemail options, according to embodiments of the invention.

From the foregoing, it should also be understood by one of ordinary skill in the art that many of the message options such as playback, delete, display message information, and others are performed offline. For example, the wireless device 138 does not establish a connection with any other component of the communications network 100 to playback stored voicemail messages stored in its memory unit 402. Moreover, once the voicemail messages and call parameters are stored on the wireless device 138, they can be repeatedly manipulated, modified, and/or rendered without communicating with any other communications networkcomponent.

Thus, a method and apparatus for processing voicemail messages have been described. Although the present invention has been described with reference to specific exemplary embodiments, it will be evident that various modifications and changes may be made to these embodiments without departing from the broader spirit and scope of the invention. Accordingly, the specification and drawings are to be regarded in an illustrative rather than a restrictive sense.

## Claims

1. A method comprising:
receiving a voicemail message in a network element;
storing said voicemail message in said network element;
transmitting said voicemail message to a wireless device, wherein said voicemail message is to be stored and accessed by said wireless device, and wherein said wireless device can repeatedly access said voicemail message without receiving additional information from said network element.

2. The method of claim 1, wherein said network element is a multimedia messaging service center.

3. The method of claim 1, wherein said accessing by said wireless device includes playing back the voicemail message.

4. The method of claim 1, wherein said transmitting the voicemail message to the wireless device comprises transmitting the voicemail message to the wireless device in a multimedia messaging service message, and wherein said wireless device includes a multimedia message service client.

5. The method of claim 1 further comprising:
in response to completing said transmission of said voicemail message, deleting said voicemail message from said network element.

6. The method of claim 1 further comprising:
transmitting to said wireless device a notification that said voicemail message has been received; and
receiving a download request from said wireless device, wherein said transmitting said voicemail message is performed in response to receiving said download request.

7. The method of claim 1, wherein said transmitting said voicemail messages is performed according to the wireless access protocol (WAP).

8. A method comprising:
receiving in a voice server, over a voice network, a plurality of voicemail messages, each with a corresponding set of call parameters, the voicemail messages destined for subscribers of wireless devices;
forming multimedia messaging service (MMS) messages, wherein each MMS message includes one of said plurality of voicemail messages and its corresponding set of call parameters, and wherein each of said MMS messages is presentable on a wireless device;
transmitting said MMS messages to a network element to be temporarily stored before transmission of the MMS messages to the wireless devices.

9. The method of claim 8, wherein said network element is a multimedia messaging service center.

10. The method of claim 8 further comprising:
transmitting a copy of each of said voicemail messages to a corresponding voicemail mailbox in a subscriber database, wherein each copy will be stored until it is deleted.

11. A method comprising:
receiving in a wireless device a voicemail message and call parameters from a network element of a data network;
storing said voicemail message and call parameters in said wireless device;
displaying said call parameters; and
in response to a playback request, playing back said stored voicemail message.

12. The method of claim 11 further comprising:
in response to a forwarding request, forwarding said stored voicemail to a set of one or more recipients.

13. The method of claim 11, wherein said stored voicemail message can be played back a plurality of times on the wireless device without the wireless device receiving more information from another device.

14. The method of claim 11, wherein said playing back is performed by a multimedia messaging service client.

15. The method of claim 11, wherein said playing back is performed by a thin wireless application protocol client.

16. A method comprising:
receiving in a voice server a voicemail message and call parameters addressed to a subscriber;
compressing the voicemail message;
combining the voicemail message and call parameters to form a multimedia messaging service (MMS) message, wherein the MMS message is presentable by an MMS client on a wireless device;
storing the MMS message in a multimedia messaging service center;
notifying the subscriber that a voicemail message has been received;
in response to receiving a download request from a wireless device associated with the subscriber, transmitting the MMS message to the wireless device over a data network to said wireless device, wherein said voicemail message and said call parameters are to be stored and presented by said wireless device; and
in response to transmitting the MMS message to the wireless device, deleting the MMS message from the multimedia messaging service center.

17. The method of claim 16 further comprising:
transmitting a copy of said voicemail message to a corresponding voicemail mailbox in a subscriber database, wherein each copy will be stored until it is deleted.

18. The method of claim 16, wherein the combining the voicemail message and call parameters to form an MMS message includes combining operator logos into the MMS message.

19. A wireless device comprising:
a voicemail message receiving unit to receive a voicemail message including call parameters from a data network;
a memory unit coupled with said voicemail message receiving unit to store said voicemail message;
a voicemail message processor unit coupled to said voicemail message receiving unit and said memory unit to process said voicemail message; and
a display unit coupled to said voicemail message operations unit to display said call parameters.

20. The wireless device of claim 19, wherein said to process said voicemail message includes to playback, to forward, and to delete said voicemail message.

21. The wireless device of claim 19, wherein said voicemail message processor unit includes a multimedia messaging service client.

22. The wireless device of claim 19, wherein said voicemail message processor unit includes a thin wireless access protocol client.

23. An apparatus comprising:
a voicemail message receiving unit to receive multimedia messaging service (MMS) messages including voicemail messages with call parameters;
a memory unit to store said MMS messages; and
a voicemail message transmission unit to transmit said MMS messages including said voicemail messages with call parameters to wireless devices, wherein said wireless devices can render said voicemail messages and call parameters.

24. The apparatus of claim 23, wherein said voicemail message transmission unit is to delete said MMS messages after they are transmitted to said wireless devices.

25. The apparatus of claim 23, wherein said voicemail message transmission unit is to transmit said MMS messages in response to download requests received from said wireless devices.

26. A machine-readable medium that provides instructions, which when executed by a machine, cause said machine to perform operations comprising:
receiving a voicemail message in a network element;
storing said voicemail message in said network element;
transmitting said voicemail message to a wireless device, wherein said voicemail message is to be stored and accessed by said wireless device, and wherein said wireless device can repeatedly process said voicemail message without receiving additional information from said network element.

27. The machine readable medium of claim 26, wherein said network element is a multimedia messaging service center.

28. The machine readable medium of claim 26, wherein said processing by said wireless device includes playing back the voicemail message.

29. The machine readable medium of claim 26, wherein said transmitting the voicemail message to the wireless device comprises transmitting the voicemail message to the wireless device in a multimedia messaging service message, and wherein said wireless device includes a multimedia message service client.

30. The machine readable medium of claim 26 further comprising:
in response to completing said transmission of said voicemail message, deleting said voicemail message from said network device; and
deleting said voicemail message from said voicemail mailbox according to an aging policy.

31. The machine readable medium of claim 26 further comprising:
transmitting to said wireless device a notification that said voicemail message has been received; and
receiving a download request from said wireless device, wherein said transmitting said voicemail message is performed in response to said download request.

32. The machine readable medium of claim 26, wherein said transmitting said voicemail messages is performed according to the wireless access protocol.

33. A machine-readable medium that provides instructions, which when executed by a machine, cause said machine to perform operations comprising:
receiving in a voice server, over a voice network, a plurality of voicemail messages, each with a corresponding set of call parameters, the voicemail messages destined for subscribers of wireless devices;
forming multimedia messaging service (MMS) messages, wherein each MMS message includes one of said plurality of voicemail messages and its corresponding set of call parameters, and wherein each of said MMS messages is presentable on a wireless device;
transmitting said MMS messages to a network element to be temporarily stored before transmission of the MMS messages to the wireless devices.

34. The machine readable medium of claim 33, wherein said network element is a multimedia messaging service center.

35. The machine readable medium of claim 33 further comprising:
transmitting a copy of each of said voicemail messages to a corresponding voicemail mailbox in a subscriber database, wherein each copy will be stored until it is deleted.

36. A machine-readable medium that provides instructions, which when executed by a machine, cause said machine to perform operations comprising:
receiving in a wireless device a voicemail message and call parameters from a network element of a data network;
storing said voicemail message and call parameters in said wireless device;
displaying said call parameters; and
in response to a playback request, playing back said stored voicemail message.

37. The machine readable medium of claim 36 further comprising:
in response to a forwarding request, forwarding said stored voicemail to a set of one or more recipients.

38. The machine readable medium of claim 36, wherein said stored voicemail message can be played back a plurality of times on the wireless device without the wireless device receiving more information from another device.

39. The machine readable medium of claim 36, wherein said playing back is performed by a multimedia messaging service client.

40. The machine readable medium of claim 36, wherein said playing back is performed by a thin wireless application protocol client.

41. A machine-readable medium that provides instructions, which when executed by a machine, cause said machine to perform operations comprising:
receiving in a voice server a voicemail message and call parameters addressed to a subscriber;
compressing the voicemail message;
combining the voicemail message and call parameters to form a multimedia messaging service (MMS) message, wherein the MMS message is presentable by an MMS client on a wireless device;
storing the MMS message in a multimedia messaging service center;
notifying the subscriber that a voicemail message has been received;
in response to receiving a download request from a wireless device associated with the subscriber, transmitting the MMS message to the wireless device over a data network to said wireless device, wherein said voicemail message and said call parameters are to be stored and presented by said wireless device; and
in response to transmitting the MMS message to the wireless device, deleting the MMS message from the multimedia messaging service center.

42. The machine readable medium of claim 41 further comprising:
transmitting a copy of said voicemail message to a corresponding voicemail mailbox in a subscriber database, wherein each copy will be stored until it is deleted.
